# FASCICULE DE BREVET EUROPEEN

(11) **EP 3 802 154 B1**
(45) Date de publication et mention de la délivrance du brevet: **06.04.2022**
(21) Numéro de dépôt: 19735364.2
(22) Date de dépôt: 28.05.2019
(51) Int. Cl.: B60C 11/04, B60C 11/12, B60C 11/03, B60C 11/13

(54) **BANDE DE ROULEMENT DE PNEU COMPRENANT DES RAINURES ONDULANTES ET DES INCISIONS**
REIFENLAUFFLÄCHE MIT GEWELLTEN RILLEN UND LAMELLEN
TYRE TREAD COMPRISING WAVY GROOVES AND SIPES

(30) Priorité: 30.05.2018 FR 1854617
(43) Date de publication de la demande: 14.04.2021
(73) Titulaire: COMPAGNIE GENERALE DES ETABLISSEMENTS MICHELIN, 63000 Clermont-Ferrand (FR)
(72) Inventeur: BERTHIER, Romain, 63040 CLERMONT FERRAND CEDEX 9 (FR); MARLIER, Fabien, 63040 CLERMONT-FERRAND Cedex 9 (FR); ZIVKOVIC, Tony, 63040 CLERMONT-FERRAND Cedex 9 (FR)
(74) Mandataire: Millanvois, Patrick Jacques Jean
(86) Numéro de dépôt international: PCT/FR2019/051249
(87) Numéro de publication internationale: WO 2019/229371

(56) Documents cités:
- EP-A2- 0 206 227
- EP-A2- 0 255 815
- WO-A1-2010/030276
- WO-A1-2011/101495
- WO-A1-2017/040007
- WO-A1-2017/176280

## Description

### DOMAINE DE L'INVENTION

L'invention concerne les bandes de roulement pour pneus et plus particulièrement les dessins de sculpture de ces bandes dont les performances en drainage de l'eau par temps de pluie sont rendues plus pérennes, ces bandes de roulement ayant en outre des performances améliorées en usure ; cette invention concerne également les pneus pourvus de telles bandes.

### ÉTAT DE LA TECHNIQUE

De façon connue, les conditions de roulage par temps de pluie d'un véhicule poids lourd requièrent une évacuation rapide de l'eau qui peut se trouver dans la région de contact du pneu ou plus particulièrement sa bande de roulement avec la chaussée afin d'assurer un contact du matériau constituant la bande de roulement avec cette chaussée. L'eau qui n'est pas repoussée sur l'avant et sur les côtés du pneu s'écoule ou est captée en partie dans les découpures ou creux formés dans la bande de roulement du pneu.

Ces découpures ou creux forment un réseau d'écoulement de fluide qui se doit d'être pérenne c'est-à-dire pouvoir être efficace pendant toute la durée d'utilisation d'un pneu entre son état neuf et son retrait pour cause d'usure atteignant une limite fixée par le manufacturier en accord avec la réglementation en vigueur.

Pour les pneus destinés aux essieux directeur ou aux essieux porteur d'un véhicule poids lourd, il est usuel de former, dans la bande de roulement de ces pneus, des rainures circonférentielles (ou rainures longitudinales) dont la profondeur est égale à l'épaisseur totale de la bande de roulement, cette épaisseur totale ne prenant pas en compte l'épaisseur éventuellement prévue pour permettre un renouvellement partiel des rainures par une opération dite de recreusage (*« regrooving* » en anglais). Ainsi, il est possible d'obtenir une bande de roulement ayant une performance en drainage de l'eau qui est toujours au-dessus d'une performance minimale dite performance de sécurité et cela quel que soit le niveau de l'usure de cette bande.

Pour les pneus de l'état de la technique, le volume total de creux à neuf est en règle générale compris entre 10% et 25% du volume total de la bande de roulement destiné à être usé au cours du roulage (le volume total correspondant au volume de matière auquel est ajouté ledit volume total de creux). On constate que ces pneus ont un volume de creux disponible dans l'aire de contact qui est relativement important à l'état neuf (volume de creux disponible signifiant que ce volume est potentiellement susceptible d'être rempli en partie ou en totalité par de l'eau présente sur la chaussée). Le volume de creux s'ouvrant sur la surface de roulement dans le contact est évalué lorsque le pneu est soumis à ses conditions usuelles de gonflage et de charge telles que définies notamment par le règlement E.T.R.T.O. pour l'Europe.

Si des découpures ou plus généralement des cavités sont indispensables au drainage de l'eau dans la région de contact avec la chaussée, la réduction de volume de matière qui en résulte sur la bande peut affecter sensiblement la performance en usure de cette bande et en conséquence peut réduire la durée d'utilisation du pneu résultant d'une augmentation de la vitesse d'usure de ladite bande.

Parmi les découpures qui peuvent être réalisées par moulage dans une bande de roulement, on distingue les rainures et les incisions, ces dernières, à la différence des rainures, ayant une largeur appropriée pour que les parois en vis-à-vis les délimitant viennent en contact au moins partiellement l'une contre l'autre lors du passage dans le contact. Les rainures génèrent un abaissement sensible des rigidités de compression et de cisaillement puisque ces rainures délimitent des portions de matière pouvant se déformer comparativement aux portions délimitées par des incisions dont les parois viennent en appui l'une contre l'autre lors du passage dans le contact. Cette diminution de rigidité, dans le cas de la présence de rainures, induit une augmentation des déformations et est susceptible de générer une diminution de la performance en usure de la bande. On observe une usure plus importante pour une distance parcourue fixée et ceci correspond à une augmentation de la vitesse d'usure de la bande. En outre, on constate une augmentation de la résistance au roulement et donc de la consommation des véhicules équipés de tels pneus, résultant d'une augmentation des pertes hystérétiques liées aux cycles de déformations de la matière composant la bande de roulement.

Pour limiter l'abaissement de rigidité liée à la présence des rainures, il a été proposé une solution décrite dans la publication de brevet WO 2011/039194. Selon cette solution, il est proposé de former une bande de roulement pour pneu destiné à un véhicule poids lourd, cette bande étant pourvue d'une pluralité de rainures ondulantes, ces rainures ondulant dans l'épaisseur de la bande et s'ouvrant d'une façon discontinue, à espace régulier ou non, sur la surface de roulement à neuf. Chaque rainure ondulante présente une pluralité de cavités externes ouvertes sur la surface de roulement, ces cavités externes étant disjointes les unes des autres dans la direction principale de la rainure ondulante. La direction principale de la rainure ondulante correspond à la direction d'écoulement de l'eau dans ladite rainure lors d'un roulage sur sol revêtu d'eau. Cette rainure ondulante comprend, outre les cavités externes, une pluralité de cavités internes formées à l'intérieur de la bande de roulement, ces cavités internes étant placées radialement et en totalité à l'intérieur par rapport à la surface de roulement à l'état neuf entre les cavités externes. Les cavités internes peuvent être prévues pour être situées à différents niveaux de profondeurs dans l'épaisseur de la bande.

En outre, la continuité de l'écoulement d'eau, ou plus généralement de fluide, à l'état neuf, dans chaque rainure ondulante est assurée par la présence de cavités de liaison ou cavités intermédiaires, chaque cavité de liaison reliant une cavité externe à une cavité interne. Chaque cavité de liaison possède deux extrémités, l'une de ces extrémités étant reliée à une cavité interne et l'autre extrémité étant reliée à une cavité externe.

Des incisions sont prévues pour relier, à la surface de roulement à neuf, les cavités internes et les cavités de liaison ; ces incisions facilitent le moulage et le démoulage des cavités formées sous la surface de roulement de la bande de roulement.

Grâce à la présence de ces cavités de liaison reliant les cavités internes et les cavités externes, il est possible, lors d'un roulage sur une chaussée revêtue d'eau, de réaliser une circulation de l'eau d'une cavité externe vers une cavité interne et ainsi d'obtenir un drainage approprié et par ailleurs une bonne ventilation thermique de la bande de roulement. De plus, grâce à cette structure de bande de roulement, le volume de l'ensemble des cavités est réduit par rapport à celui que l'on aurait avec des rainures ouvertes en totalité sur la surface de roulement à neuf, ces dernières ayant une profondeur correspondant au fond des cavités internes. Ce type de rainure ondulante permet ainsi de limiter la réduction de rigidité de la bande de roulement à l'état neuf liée directement à la présence des rainures.

Ce type de rainure ondulante peut bien entendu être combiné avec la présence d'au moins une rainure ouverte sur toute sa longueur sur la surface de roulement de la bande de roulement dès l'état neuf.

Ce type de rainure ondulante peut être décrit comme étant une rainure s'ouvrant à neuf d'une façon discontinue sur la surface de roulement à neuf.

Il a été constaté que la seule présence de rainures ondulantes ne permettait pas d'atteindre le niveau d'adhérence en motricité et en freinage requis sur certains véhicules poids lourd et qu'il était nécessaire de compléter ces rainures par une pluralité d'incisions s'ouvrant à neuf sur la surface de roulement afin de générer une longueur supplémentaire d'arêtes utile pour atteindre un bon niveau de motricité et une bonne adhérence dans des conditions dites « glissantes » notamment sur sol revêtu d'eau.

Il a par ailleurs été constaté que la combinaison de ces incisions avec des rainures ondulantes comportant notamment des cavités ouvertes et des cavités cachées à neuf pouvait conduire à une usure irrégulière dès lors que ladite combinaison n'était pas gérée de manière appropriée. Par usure irrégulière, on entend ici que l'usure n'est pas uniformément répartie sur toute la surface de roulement mais que certaines zones sont davantage usées comparativement à d'autres zones. Cette usure irrégulière peut conduire à un retrait prématuré des pneus d'un véhicule afin de les remplacer par des pneus neufs, ce qui constitue une augmentation sensible du prix de revient kilométrique.

Le document EP0206227-A2 montre une bande de roulement avec des rainures ondulantes, chaque rainure ondulante comprenant des cavités externes ouvertes sur la surface de roulement et des cavités internes cachées dans l'épaisseur de la bande de roulement, et avec des incision latérales entre lesdites rainures ondulantes.

### Définitions :

Chaque cavité externe comprend des parois en vis-à-vis, ces parois étant reliées entre elles par un fond formant le fond de la cavité externe. La distance entre les parois en vis-à-vis définit une largeur maximale de la cavité externe. La distance entre les points du fond de la cavité externe les plus à l'intérieur de la bande de roulement et la surface de roulement à neuf définit une profondeur de la cavité externe. Chaque cavité externe a une longueur maximale d'ouverture sur la surface de roulement, cette longueur étant mesurée entre les points les plus éloignés du contour d'arête à neuf de ladite cavité externe.

La surface de roulement d'une bande de roulement correspond à l'ensemble des surfaces élémentaires de la bande pouvant venir en contact avec une chaussée lors du roulage d'un pneu pourvu d'une telle bande de roulement.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle ou direction longitudinale, on entend une direction qui est tangente à tout cercle centré sur l'axe de rotation. Cette direction est perpendiculaire à la fois à la direction axiale et à une direction radiale.

L'épaisseur totale d'une bande de roulement est mesurée à l'état neuf, sur le plan médian équatorial du pneu pourvu de cette bande, entre la surface de roulement et la partie radialement la plus à l'extérieur de l'armature de sommet.

Une bande de roulement a une épaisseur maximale de matière à user en roulage, cette épaisseur maximale de matière à user étant en règle générale inférieure à l'épaisseur totale de la bande de roulement.

Le plan médian équatorial est un plan perpendiculaire à l'axe de rotation divisant le pneu en deux moitiés égales.

Les conditions usuelles de roulage du pneu ou conditions d'utilisation sont celles qui sont définies par la norme E.T.R.T.O. pour des roulages européens ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

### BREF EXPOSE DE L'INVENTION

L'objectif de l'invention est de proposer une bande de roulement comprenant au moins une rainure ondulante d'orientation longitudinale (c'est à dire circonférentielle sur le pneu pourvu de ladite bande), cette bande de roulement ayant un niveau approprié en adhérence notamment sur sol revêtu d'eau et ne développant pas d'usure irrégulière tout en limitant le bruit en roulage. Pour cette bande de roulement le risque d'initiation de fissures liée à la capture de cailloux ou à une trop grande déformation locale est en outre réduit.

Dans ce but, la bande de roulement selon l'invention comprend une surface de roulement, une épaisseur de matière à user en roulage, cette épaisseur s'étendant perpendiculairement à la surface de roulement. Cette bande de roulement est pourvue d'une sculpture formée par au moins deux rainures d'orientation longitudinale s'ouvrant sur la surface de roulement de la bande de roulement dont au moins une rainure ondulante. Cette bande de roulement comprend au moins une nervure orientée dans la direction longitudinale de la bande de roulement et délimitée par au moins une desdites rainures ondulantes. Chaque rainure ondulante comprend des cavités externes ouvertes sur la surface de roulement et des cavités internes cachées dans l'épaisseur de la bande de roulement.

Les cavités externes de chaque rainure ondulante s'ouvrent sur la surface de roulement à neuf avec un contour dont les points d'extrémité les plus éloignés A et B l'un de l'autre sont à une distance longitudinale Lm, cette distance Lm mesurant la longueur maximale selon la direction longitudinale du contour de chaque cavité externe. Chaque cavité externe à une profondeur Ho.

La nervure de largeur Ln (égale à la plus petite des distances entre les rainures délimitant ladite nervure) comprend une pluralité d'incisions transversales (c'est à dire d'orientation égale ou supérieure à 45 degrés avec la direction longitudinale) implantées avec un pas moyen Pi. La profondeur de ces incisions est au moins égale à la profondeur Ho des cavités externes de la rainure ondulante délimitant ladite nervure.

La bande de roulement est caractérisée en ce que :
- la longueur longitudinale Lm du contour de la cavité externe est égale ou supérieure à un multiple entier N du pas Pi d'une quantité au plus égale à 25% de ce multiple entier N du pas Pi,
- à neuf, N+1 incisions d'une même nervure débouchent dans chaque cavité ouverte bordant ladite nervure, l'une de ces incisions s'ouvrant près du point d'extrémité A du contour à une distance D1 de ce point A, la seconde incision s'ouvrant près de l'autre point d'extrémité B du contour à une distance D2 de ce point B, l'écart entre les deux distances D1 et D2 étant au plus égal à 5 mm.

Préférentiellement, le taux de creux volumique total à neuf est au plus égal à 13% et encore plus préférentiellement au plus égal à 10%. Ce taux est calculé en tenant compte de tous les creux formés dans la bande de roulement.

Dans une variante de l'invention, la bande de roulement comprend plusieurs nervures intermédiaires et des nervures de bord ces dernières encadrant axialement les nervures intermédiaires. Chaque nervure intermédiaire est délimitée par au moins une rainure ondulante et est pourvue d'une pluralité d'incisions transversales. De façon avantageuse, sur chaque nervure intermédiaire :
- la longueur longitudinale Lm du contour d'ouverture de chaque cavité externe sur la surface de roulement est égale ou supérieure à un multiple entier N du pas Pi des incisions d'une quantité au plus égale à 25% de ce multiple entier N du pas Pi,
- à neuf, N+1 incisions d'une même nervure débouchent dans chaque cavité ouverte bordant ladite nervure, l'une de ces incisions s'ouvrant près du point d'extrémité A du contour à une distance D1 de ce point A, la seconde incision s'ouvrant près de l'autre point d'extrémité B du contour à une distance D2 de ce point B, l'écart entre les deux distances D1 et D2 étant au plus égal à 5 mm.

Préférentiellement, le multiple N est identique pour toutes les nervures intermédiaires. On réduit ainsi la possibilité de non uniformités dans la répartition des masses dans la direction circonférentielle, ainsi que la possibilité d'usure plus prononcée sur certaines parties de la bande de roulement en roulage.

Préférentiellement, les distances D1 et D2 sont égales et cela pour toutes les nervures.

Avantageusement, les cavités ouvertes des rainures ondulantes sont décalées de façon à ne pas rentrer de façon simultanée dans le contact avec la chaussée.

Préférentiellement, les incisions sur les nervures intermédiaires et des cavités ouvertes des rainures ondulantes sont localisées sur la bande de roulement de façon appropriée afin que ces incisions et ces cavités ouvertes rentrent de façon successive dans le contact avec la chaussée, toute extrémité d'incision ou de cavité ouverte étant positionnée sur une droite de direction axiale sur laquelle n'est positionnée aucune autre extrémité d'incision ou de cavité ouverte.

En outre et pour réduire la surface de l'ouverture de chaque cavité externe vue de la surface de roulement à neuf, il est formé au moins une lame mince de matière caoutchoutique, chaque lame mince étant solidaire d'au moins une des parois délimitant chaque cavité externe.

Par lame mince, on entend dans la présente description une lame de matière caoutchoutique issue du matériau composant la bande de roulement, cette lame mince ayant une épaisseur faible mais non nécessairement constante. Par épaisseur faible, il faut comprendre une épaisseur appropriée pour permettre la flexion de la lame mince vers l'intérieur de la cavité lors du roulage sur une chaussée revêtue d'eau.

Avantageusement, chaque lame mince a une épaisseur au plus égale à 3 mm pour autoriser la flexion sous l'action d'un flux de liquide dans la rainure ondulante. Encore plus préférentiellement, l'épaisseur de chaque lame mince est au plus égale à 2 mm.

Grâce à cette dernière disposition et en combinaison avec l'arrangement proposé des incisions s'ouvrant près des extrémités des contours des cavités externe, il est possible de réduire de façon sensible le bruit en roulage.

Grâce à la flexibilité de ces lames minces, la circulation de l'eau n'est pas trop perturbée lors des roulages sur route recouverte d'eau.

L'invention concerne également un pneu de véhicule poids lourd pourvu d'une bande de roulement telle que décrite précédemment.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 représente une vue de la surface d'une bande de roulement d'un pneu de poids lourd d'une première variante de l'invention pour laquelle N est égal à 1 ;
La figure 2 montre une vue en coupe selon un plan dont la trace sur la figure 1 est repérée par la ligne II-II ;
La figure 3 montre une vue en coupe selon un plan dont la trace sur la figure 1 est repérée par la ligne III-III;
La figure 4 montre une vue de la surface d'une autre variante d'une bande de roulement pour pneu de poids lourd selon l'invention et pour laquelle N est égal à 2.

### DESCRIPTION DES FIGURES

Pour faciliter la lecture des figures, des signes de référence identiques peuvent être employés pour la description de différentes variantes de l'invention dès lors que ces signes de référence renvoient à des éléments de même nature que cette nature soit structurelle ou bien fonctionnelle.

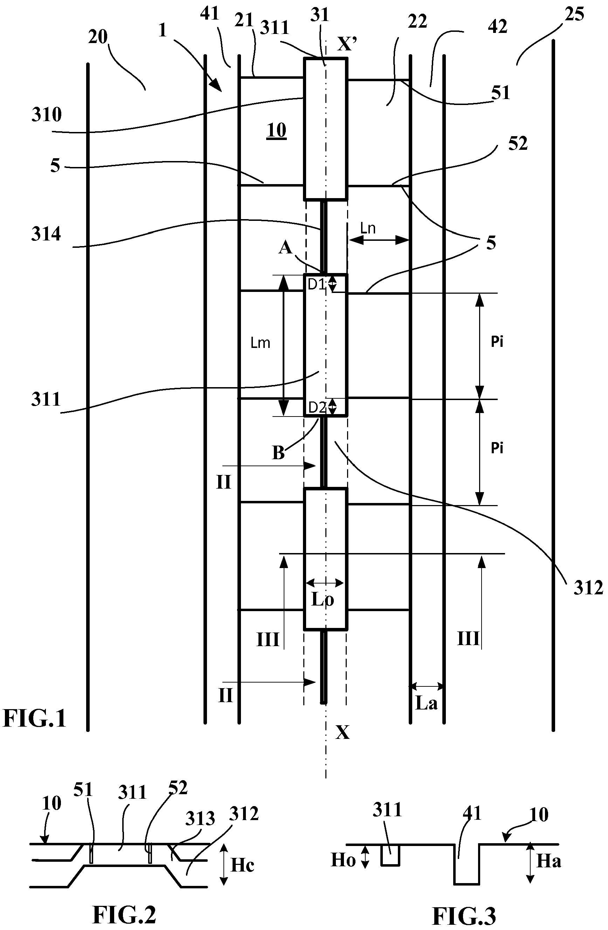

Avec le support de la figure 1, la première variante de l'invention décrit une bande de roulement 1 ayant une surface de roulement 10 destinée à être en contact avec une chaussée lors du roulage d'un pneu pourvu de ladite bande. Cette bande 1 présente une épaisseur de matière à user en roulage dans laquelle sont formées des découpures, rainures ou incisions.

La figure 1 montre la vue de la surface de roulement 10 de cette bande de roulement, cette bande comprenant trois rainures d'orientation circonférentielle 31, 41, 42 (selon la direction circonférentielle indiquée par la ligne XX'). Ces trois rainures délimitent deux nervures circonférentielles intermédiaires 21, 22 et deux nervures de bord 20, 25 axialement à l'extérieur. Deux de ces rainures 41, 42 sont des découpures ouvertes sur toute leur longueur sur la surface de roulement de la bande de roulement à neuf. Ces deux rainures 41, 42 ont une même largeur moyenne La et une profondeur Ha (visible sur la figure 3). Ces deux rainures encadrent une troisième rainure ondulante 31 ondulant dans l'épaisseur de la bande.

Cette rainure ondulante 31 comprend des cavités externes 311 ouvertes sur la surface de roulement 10 et des cavités internes cachées 312 dans l'épaisseur de la bande de roulement. Les cavités internes 312 cachées sont reliées aux cavités externes 311 ouvertes par des cavités de liaison 313 (visibles sur la figure 2) permettant d'assurer la continuité d'un écoulement de fluide dans la rainure à neuf et jusqu'à une usure partielle prédéterminée.

Les cavités externes 311 de chaque rainure ondulante s'ouvrent sur la surface de roulement 10 à neuf et sont limitées par un contour 310 de forme rectangulaire allongée dans la direction circonférentielle et dont les points d'extrémité les plus éloignés A et B sont à une distance longitudinale Lm l'un de l'autre, cette distance Lm mesurant la longueur maximale du contour rectangulaire de chaque cavité externe 311 selon la direction longitudinale. Chaque cavité externe 311 a une largeur moyenne Lo, égale dans la variante décrite à la largeur La des autres rainures, et a une profondeur Ho, cette profondeur correspondant à l'usure de la bande de roulement pour laquelle il y a disparition des cavités externes 311.

Pour faciliter le moulage et le démoulage de la bande de roulement, il est prévu la formation d'incisions circonférentielles 314 s'ouvrant sur la surface de roulement 10 et dans les cavités cachées 312 et dans les cavités de liaison 313.

Chacune des deux nervures intermédiaires 21, 22 de la bande de roulement est délimitée par à la fois une rainure 41 ou 42 ouverte sur toute sa longueur et par la rainure ondulante 31.

Les nervures intermédiaires 21, 22 ont une même largeur Ln mesurant la plus petite largeur entre les rainures les délimitant. La largeur maximale de ces nervures intermédiaires est égale à la somme de cette plus petite largeur et de la moitié de la largeur des cavités externes 311.

Par ailleurs, chacune des nervures intermédiaires 21, 22 est pourvue avec une pluralité d'incisions transversales 5 faisant dans le cas présent un angle égal à 90 degrés avec la direction circonférentielle XX'. Ces incisions 5 sont disposées sur chaque nervure intermédiaire 21, 22 avec un même pas moyen Pi. La profondeur de ces incisions est égale à la profondeur maximale Hc des cavités cachées de la rainure ondulante. Cette profondeur maximale Hc des cavités cachées 312 étant égale à la profondeur Ha des rainures ouvertes 41, 42. Dans cette variante, deux incisions 5 s'ouvrent dans chaque cavité ouverte.

Par ailleurs, la bande de roulement est telle que :
- la longueur longitudinale Lm du contour de chaque cavité externe de la rainure ondulante 31 est dans cet exemple légèrement supérieure au pas Pi des incisions transversales 5, de l'ordre de 10% ;
- à neuf, deux incisions 51, 52 d'une même nervure intermédiaire 21, 22 débouchent dans chaque cavité ouverte 311 bordant ladite nervure, une incision 51 s'ouvrant près d'une extrémité A du contour rectangulaire 310 correspondant à un coin dudit rectangle soit à une distance D1 non nulle de ce point A, l'autre incision 52 s'ouvrant près de l'autre point d'extrémité B du contour rectangulaire soit à une distance D2 non nulle de ce point B. Les distances D1 et D2 sont égales dans l'exemple décrit et leur somme est égale à 10% du pas Pi.

La figure 2 montre une vue en coupe selon un plan dont la trace sur la figure 1 est repérée par la ligne II-II.

La figure 3 montre une vue en coupe selon un plan dont la trace sur la figure 1 est repérée par la ligne III-III.

Dans cette première variante, les incisions sur chaque nervure intermédiaire ont une même disposition par rapport aux cavités externes des rainures ondulantes.

Grâce à cet agencement des incisions transversales 51, 52 et des cavités externes 311 de la rainure ondulante 31, il est possible de réaliser une bande de roulement ayant un niveau satisfaisant en adhérence notamment sur lors de roulage sur sol revêtu d'eau et ne développant pas d'usure irrégulière tout en limitant le bruit en roulage. Par ailleurs, cette bande de roulement diminue le risque d'initiation de fissures liée à la capture de cailloux.

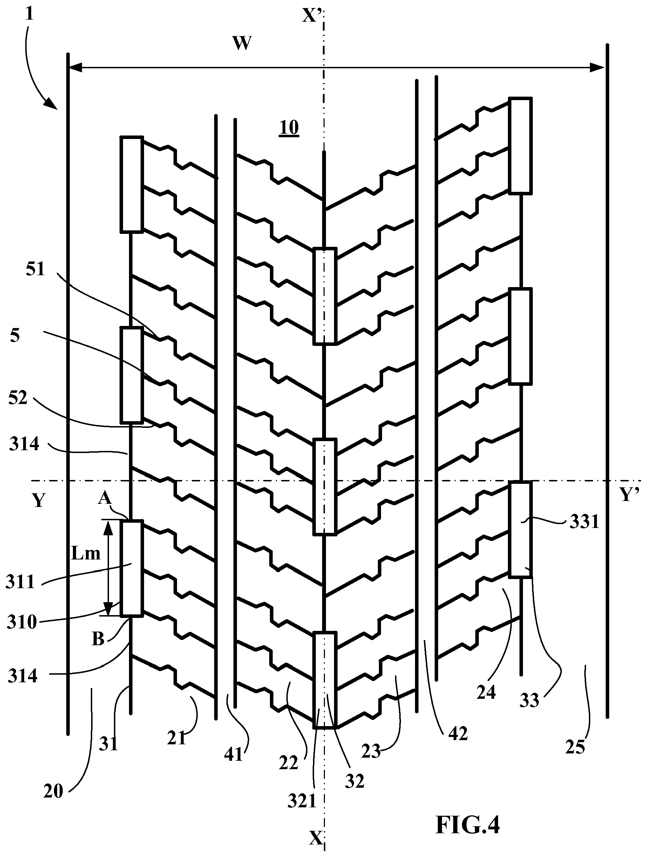

La figure 4 montre la surface de roulement d'une bande de roulement 1 d'un pneu pour poids lourd de dimension 315/70 R 22.5.

Cette bande de roulement 1 a une largeur W égale à 265mm et une épaisseur de matière à user égale à 11 mm; elle est pourvue d'une sculpture formée de cinq rainures d'orientation circonférentielle et d'incisions d'orientation oblique.

Cette bande comprend trois rainures ondulantes 31, 32, 33 dans son épaisseur et, intercalées entre ces rainures ondulantes, deux rainures ouvertes 41, 42 sur toute leur longueur sur la surface de roulement 10 à l'état neuf.

Les rainures ouvertes 41, 42 sur toute leur longueur ont une profondeur de 12 mm et une largeur égale à 8 mm.

Les rainures ondulantes 31, 32, 33 comportent des cavités externes 311, 321, 331 ouvertes sur la surface de roulement à neuf et des cavités internes cachées à l'intérieur de la bande, ces cavités externes et internes étant reliées entre elles par des cavités de liaison. La largeur moyenne de ces cavités est égale à 8 mm. Chaque cavité externe 311, 321, 331 a une profondeur égale à 6 mm. En outre, une incision 314, 324, 334 de largeur 0.6 mm relie chaque cavité cachée aux cavités de liaison formées de part et d'autre de la cavité cachée. Les points les plus à l'intérieur des rainures ondulantes sont à une profondeur égale à 12 mm.

Les dimensions données pour la rainure ondulante 31 se retrouvent sur les autres rainures ondulantes 32, 33. Les cavités externes 311 ont un contour 310 sur la surface de roulement 10 à neuf de forme rectangulaire allongé de longueur maximale Lm égale dans cette variante à 77 mm (cette longueur mesure la distance entre les points A et B situés aux extrémités de ce contour correspondant aux points de raccordement avec les incisions circonférentielles 314). Ces cavités externes 311 sont agencées dans la direction circonférentielle avec un pas égal à 154 mm.

La sculpture de la bande de roulement délimite ainsi quatre nervures intermédiaires 21, 22, 23, 24 et deux nervures de bord 20, 25, ces dernières délimitant axialement la largeur W de la bande. Chaque nervure intermédiaire est délimitée par une rainure ondulante et une rainure ouverte sur toute sa longueur.

Les rainures sont agencées de façon à ce que les nervures intermédiaires aient toutes une même largeur minimale Ln égale à 34 mm.

Cette bande de roulement a un taux de creux volumique à neuf valant 12.5%.

En outre, chaque nervure intermédiaire comprend une pluralité d'incisions 5 d'orientation générale oblique parallèles entre elles sur une même nervure et agencées avec un pas moyen Pi (correspondant à la distance moyenne entre deux incisions mesurée dans la direction circonférentielle) ; dans le cas présent ce pas Pi est égal à 33 mm.

L'orientation générale d'une incision 5 est obtenue comme l'angle que fait un segment de droite passant par les points d'extrémité de l'incision avec la direction transversale - indiquée par l'axe YY' sur le plan de la figure 4. Les incisions 5 sont implantées sur toutes les nervures intermédiaires avec une orientation générale faisant un angle moyen - en valeur absolue - égal à 15 degrés avec la direction transversale. En outre, ces incisions 5 sont agencées sur les nervures intermédiaires pour conférer un caractère directionnel au dessin de sculpture de la bande de roulement 1, les incisions 5 sur une moitié de la bande de roulement ayant une même orientation tandis que sur l'autre moitié l'angle d'orientation est de valeur opposée.

Pour obtenir un bon niveau de performance en adhérence notamment sur sol revêtu d'eau sans développer d'usure irrégulière et tout en limitant le bruit en roulage, trois incisions 5 s'ouvrent sur chaque cavité externe 311 des rainures ondulantes. Parmi ces trois incisions 5, les deux incisions 51, 52 les plus proches des extrémités A et B du contour de chaque cavité externe 311 sont à des distances respectives D1 égale à 7.1 mm et D2 égale à 3.9 mm desdites extrémités A et B.

En positionnant ces incisions 51, 52 au plus près des extrémités A et B du contour 310 de chaque cavité externe 311, et en limitant l'écart entre ces distances, il est de manière surprenante possible de régler les problèmes mentionnés et également de limiter le risque d'initiation de fissures liée à la capture de cailloux.

L'invention qui a été décrite avec le support de deux variantes ne saurait bien sûr être limitée à ces seules variantes et diverses modifications peuvent y être apportées tout en demeurant dans le cadre défini par les revendications.

## Revendications

1. Bande de roulement (1) de pneu comprenant une surface de roulement (10), une épaisseur de matière à user en roulage, cette bande de roulement étant pourvue d'une sculpture formée par au moins deux rainures d'orientation longitudinale (31, 41, 42) s'ouvrant sur la surface de roulement (10) de la bande de roulement dont au moins une rainure ondulante (31), cette bande de roulement comprenant au moins une nervure (21) orientée dans la direction longitudinale de la bande de roulement et délimitée par ladite au moins une rainure ondulante, chaque rainure ondulante comprenant des cavités externes (311) ouvertes sur la surface de roulement et des cavités internes (312) cachées dans l'épaisseur de la bande de roulement, les cavités externes (311) de chaque rainure ondulante (31) s'ouvrant sur la surface de roulement (10) à neuf avec un contour (310) dont les points d'extrémité les plus éloignés (A, B) l'un de l'autre selon la direction longitudinale sont à une distance longitudinale Lm l'un de l'autre, cette distance Lm mesurant la longueur longitudinale maximale du contour de chaque cavité externe, chaque cavité externe (311) ayant une profondeur Ho, la nervure (21) de largeur Ln comprenant une pluralité d'incisions transversales (5), c'est-à-dire d'orientation égale ou supérieure à 45 degrés avec la direction longitudinale, implantées avec un pas moyen Pi, la profondeur de ces incisions transversales (5) étant au moins égale à la profondeur Ho des cavités externes (311) de la rainure ondulante (31) délimitant ladite nervure, cette bande de roulement étant **caractérisée en ce que** :
- la longueur longitudinale Lm du contour (310) de la cavité externe (311) est égale ou supérieure à un multiple entier N du pas Pi d'une quantité au plus égale à 25% de ce multiple entier N du pas Pi,
- à neuf, N+1 incisions transversales (5) d'une même nervure (21) débouchent dans chaque cavité ouverte (311) bordant ladite nervure, l'une de ces incisions transversales (51) s'ouvrant près du point d'extrémité A du contour (310) à une distance D1 de ce point A, une autre incision transversale (52) s'ouvrant près de l'autre point d'extrémité B du contour (310) à une distance D2 de ce point B, l'écart entre les deux distances D1 et D2 étant au plus égal à 5 mm.

2. Bande de roulement selon la revendication 1 **caractérisée en ce que** le taux de creux volumique à neuf est au plus égal à 13% et encore plus préférentiellement au plus égal à 10%.

3. Bande de roulement selon la revendication 1 ou la revendication 2 **caractérisée en ce qu'**elle comprend plusieurs nervures intermédiaires (21, 22) et des nervures de bord (20, 25) ces dernières encadrant axialement les nervures intermédiaires, chaque nervure intermédiaire étant délimitée par au moins une rainure ondulante 3(1) et étant pourvue d'une pluralité d'incisions transversales (5), sur chaque nervure intermédiaire (21, 22) :
- la longueur longitudinale Lm du contour d'ouverture de chaque cavité externe (311) sur la surface de roulement (10) est égale ou supérieure à un multiple entier N du pas Pi des incisions transversales (5) d'une quantité au plus égale à 25% de ce multiple entier N du pas Pi,
- à neuf, N+1 incisions transversales (5) d'une même nervure débouchent dans chaque cavité ouverte (311) bordant ladite nervure, l'une de ces incisions (51) s'ouvrant près du point d'extrémité A du contour à une distance D1 de ce point A, une autre incision (52) s'ouvrant près de l'autre point d'extrémité B du contour à une distance D2 de ce point B, l'écart entre les deux distances D1 et D2 étant au plus égal à 5 mm.

4. Bande de roulement selon l'une quelconque des revendications 1 à 3 **caractérisée en ce que** le multiple N est identique pour toutes les nervures intermédiaires.

5. Bande de roulement selon l'une quelconque des revendications 1 à 4 **caractérisée en ce que** la distance D1 est égale à la distance D2 pour toutes les nervures.

6. Bande de roulement selon l'une quelconque des revendications 1 à 5 **caractérisée en ce que** les cavités ouvertes (311) des rainures ondulantes (31) sont décalées les unes par rapport aux autres de façon à ce que ces cavités externes ne rentrent pas dans le contact avec la chaussée en même temps.

7. Bande de roulement selon l'une quelconque des revendications 1 à 6 **caractérisée en ce qu'**il existe un décalage approprié des incisions transversales (5) sur les nervures intermédiaires et un décalage approprié des cavités ouvertes (311) des rainures ondulantes (31) de façon à ce que les incisions transversales (5) et les cavités ouvertes (311) rentrent de façon successive dans le contact, toute extrémité d'incision (5) ou de cavité ouverte (311) étant positionnée sur une droite de direction axiale (YY') sur laquelle n'est positionnée aucune autre extrémité d'incision (5) ou de cavité ouverte (311).

8. Bande de roulement selon l'une quelconque des revendications 1 à 7 **caractérisée en ce qu'**il est formé au moins une lame mince de matière caoutchoutique aux extrémités du contour (310) des cavités externes (31), chaque lame mince étant solidaire d'au moins une des parois délimitant chaque cavité externe.

9. Pneu de véhicule poids lourd pourvu d'une bande de roulement selon l'une quelconque des revendications 1 à 8.

## Patentansprüche

1. Reifenlaufstreifen (1), welcher eine Lauffläche (10) und eine beim Fahren abzunutzende Materialstärke umfasst, wobei dieser Laufstreifen mit einem Profil versehen ist, das von wenigstens zwei längs ausgerichteten Rillen (31, 41, 42) gebildet wird, die zur Lauffläche (10) des Laufstreifens hin offen sind, darunter wenigstens eine gewellte Rille (31), wobei dieser Laufstreifen wenigstens eine Rippe (21) umfasst, die in der Längsrichtung des Laufstreifens ausgerichtet ist und von der wenigstens einen gewellten Rille begrenzt wird, wobei jede gewellte Rille äußere Hohlräume (311), die zur Lauffläche hin offen sind, und innere Hohlräume (312), die in der Dicke des Laufstreifens verborgen sind, umfasst, wobei die äußeren Hohlräume (311) jeder gewellten Rille (31) sich an der Lauffläche (10) im Neuzustand mit einer Kontur (310) öffnen, deren in der Längsrichtung am weitesten voneinander entfernte Endpunkte (A, B) eine Längsentfernung Lm voneinander aufweisen, wobei diese Entfernung Lm die maximale Länge der Kontur jedes äußeren Hohlraums in Längsrichtung angibt, wobei jeder äußere Hohlraum (311) eine Tiefe Ho aufweist, wobei die Rippe (21) mit einer Breite Ln mehrere Quereinschnitte (5) umfasst, das heißt mit einem Winkel zur Längsrichtung, der größer oder gleich 45 Grad ist, die in einem mittleren Abstand Pi voneinander angebracht sind, wobei die Tiefe dieser Quereinschnitte (5) wenigstens gleich der Tiefe Ho der äußeren Hohlräume (311) der gewellten Rille (31) ist, welche die Rippe begrenzt, wobei dieser Laufstreifen **dadurch gekennzeichnet ist, dass**:
- die Länge in Längsrichtung Lm der Kontur (310) des äußeren Hohlraums (311) gleich einem ganzzahligen Vielfachen N des Abstands Pi oder um einen Betrag, der höchstens gleich 25 % dieses ganzzahligen Vielfachen N des Abstands Pi ist, größer als dieses ist,
- im Neuzustand N+1 Quereinschnitte (5) ein und derselben Rippe (21) in jeden offenen Hohlraum (311) münden, der die Rippe umrandet, wobei einer dieser Quereinschnitte (51) sich in der Nähe des Endpunktes A der Kontur (310) in einer Entfernung D1 von diesem Punkt A öffnet, wobei ein anderer Quereinschnitt (52) sich in der Nähe des anderen Endpunktes B der Kontur (310) in einer Entfernung D2 von diesem Punkt B öffnet, wobei die Abweichung zwischen den zwei Entfernungen D1 und D2 höchstens gleich 5 mm ist.

2. Laufstreifen nach Anspruch 1, **dadurch gekennzeichnet, dass** der volumenbezogene Hohlraumanteil im Neuzustand höchstens gleich 13 % und, noch stärker bevorzugt, höchstens gleich 10 % ist.

3. Laufstreifen nach Anspruch 1 oder Anspruch 2, **dadurch gekennzeichnet, dass** er mehrere Zwischenrippen (21, 22) und Randrippen (20, 25) umfasst, wobei diese Letzteren die Zwischenrippen axial umrahmen, wobei jede Zwischenrippe von wenigstens einer gewellten Rille (31) begrenzt wird und mit mehreren Quereinschnitten (5) versehen ist, wobei an jeder Zwischenrippe (21, 22) :
- die Länge in Längsrichtung Lm der Öffnungskontur jedes äußeren Hohlraums (311) an der Lauffläche gleich einem ganzzahligen Vielfachen N des Abstands Pi der Quereinschnitte (5) oder um einen Betrag, der höchstens gleich 25 % dieses ganzzahligen Vielfachen N des Abstands Pi ist, größer als dieses ist,
- im Neuzustand N+1 Quereinschnitte (5) ein und derselben Rippe in jeden offenen Hohlraum (311) münden, der die Rippe umrandet, wobei einer dieser Einschnitte (51) sich in der Nähe des Endpunktes A der Kontur in einer Entfernung D1 von diesem Punkt A öffnet, wobei ein anderer Einschnitt (52) sich in der Nähe des anderen Endpunktes B der Kontur in einer Entfernung D2 von diesem Punkt B öffnet, wobei die Abweichung zwischen den zwei Entfernungen D1 und D2 höchstens gleich 5 mm ist.

4. Laufstreifen nach einem der Ansprüche 1 bis 3, **dadurch gekennzeichnet, dass** das Vielfache N für alle Zwischenrippen identisch ist.

5. Laufstreifen nach einem der Ansprüche 1 bis 4, **dadurch gekennzeichnet, dass** für alle Rippen die Entfernung D1 gleich der Entfernung D2 ist.

6. Laufstreifen nach einem der Ansprüche 1 bis 5, **dadurch gekennzeichnet, dass** die offenen Hohlräume (311) der gewellten Rillen (31) derart zueinander versetzt sind, dass diese äußeren Hohlräume nicht gleichzeitig mit der Fahrbahn in Kontakt kommen.

7. Laufstreifen nach einem der Ansprüche 1 bis 6, **dadurch gekennzeichnet, dass** ein geeigneter Versatz der Quereinschnitte (5) in den Zwischenrippen und ein geeigneter Versatz der offenen Hohlräume (311) der gewellten Rillen (31) vorhanden sind, derart, dass die Quereinschnitte (5) und die offenen Hohlräume (311) nacheinander in Kontakt kommen, wobei jedes Ende eines Einschnitts (5) oder eines offenen Hohlraums (311) auf einer Geraden mit axialer Richtung (YY') positioniert ist, auf welcher kein anderes Ende eines Einschnitts (5) oder eines offenen Hohlraums (311) positioniert ist.

8. Laufstreifen nach einem der Ansprüche 1 bis 7, **dadurch gekennzeichnet, dass** er an den Enden der Kontur (310) der äußeren Hohlräume (31) von einer dünnen Lamelle aus Kautschukmaterial gebildet wird, wobei jede dünne Lamelle mit wenigstens einer der Wände, die jeden äußeren Hohlraum begrenzen, fest verbunden ist.

9. Lkw-Reifen, welcher mit einem Laufstreifen nach einem der Ansprüche 1 bis 8 versehen ist.

## Claims

1. Tyre tread (1) comprising a tread surface (10), a thickness of material to be worn away during running, this tread being provided with a tread pattern formed by at least two longitudinally oriented grooves (31, 41, 42) opening onto the tread surface (10) of the tread, and of which at least one is a wavy groove, this tread comprising at least one rib (21) oriented in the longitudinal direction of the tread and delimited by said at least one wavy groove, each wavy groove comprising external cavities (311) opening onto the tread surface and internal cavities (312) hidden within the thickness of the tread, the external cavities (311) of each wavy groove (31) opening onto the tread surface (10) when new with a contour (310) of which the longitudinally farthest-spaced endpoints (A, B) are separated by a longitudinal distance Lm, this distance Lm measuring the maximum longitudinal length of the contour of each external cavity, each external cavity (311) having a depth Ho, the rib (21) of width Ln comprising a plurality of transverse sipes (5), which is to say sipes oriented at 45 degrees or more to the longitudinal direction, made at a mean pitch Pi, the depth of these transverse sipes (5) being at least equal to the depth Ho of the external cavities (311) of the wavy groove (31) delimiting said rib, this tread being **characterized in that**:
- the longitudinal length Lm of the contour (310) of the external cavity (311) is equal to or greater than an integer multiple N of the pitch Pi times an amount at most equal to 25% of this integer multiple N of the pitch Pi,
- when new, N+1 transverse sipes (5) of the one same rib (21) open into each open cavity (311) bordering said rib, one of these transverse sipes (51) opening near the end point A of the contour (310) at a distance D1 from this point A, another transverse sipe (52) opening near the other end point B of the contour (310) at a distance D2 from this point B, the difference between the two distances D1 and D2 being at most equal to 5 mm.

2. Tread according to Claim 1, **characterized in that** the total voids volume ratio when new is at most equal to 13% and more preferably still at most equal to 10%.

3. Tread according to Claim 1 or Claim 2, **characterized in that** it comprises several intermediate ribs (21, 22) and edge ribs (20, 25), the latter axially flanking the intermediate ribs, each intermediate rib being delimited by at least one wavy groove (31) and being provided with a plurality of transverse sipes (5), and on each intermediate rib (1, 22):
- the longitudinal length Lm of the contour of the opening of each external cavity (311) onto the tread surface (10) is equal to or greater than an integer multiple N of the pitch Pi of the transverse sipes (5) times an amount at most equal to 25% of this integer multiple N of the pitch Pi,
- when new, N+1 transverse sipes (5) of the one same rib open into each open cavity (311) bordering said rib, one of these sipes (5) opening near the end point A of the contour at a distance D1 from this point A, another sipe (52) opening near the other end point B of the contour at a distance D2 from this point B, the difference between the two distances D1 and D2 being at most equal to 5 mm.

4. Tread according to any one of Claims 1 to 3, **characterized in that** the multiple N is identical for all the intermediate ribs.

5. Tread according to any one of Claims 1 to 4, **characterized in that** the distance D1 is equal to the distance D2 for all the ribs.

6. Tread according to any one of Claims 1 to 5, **characterized in that** the open cavities (311) of the wavy grooves (31) are offset from one another so that these external cavities do not come into contact with the road surface at the same time.

7. Tread according to any one of Claims 1 to 6, **characterized in that** the transverse sipes (5) are offset on the intermediate ribs and the open cavities (311) on the wavy grooves (31) in a way suitable for the transverse sipes (5) and these open cavities (311) to come into the contact patch successively, any end of sipe (5) or open cavity (311) being positioned on a line of axial direction (YY') on which no other end of sipe (5) or open cavity (311) is positioned.

8. Tread according to any one of Claims 1 to 7, **characterized in that** at least one thin blade of rubbery material is formed at the ends of the contour (310) of the external cavities (31), each thin blade being attached to at least one of the walls delimiting each external cavity.

9. Tyre for a heavy duty vehicle provided with a tread according to any one of Claims 1 to 8.
